# EUROPEAN PATENT APPLICATION

(11) **EP 4 843 817 A1**
(43) Date of publication of application: **25.11.2026**
(21) Application number: 25857949.9
(22) Date of filing: 21.03.2025
(51) Int. Cl.: B60L 15/20

(54) **MOTOR POSITION CONTROL METHOD, MOTOR POSITION CONTROL PROGRAM, AND MOTOR CONTROL CIRCUIT**

(71) Applicant: SHINDENGEN ELECTRIC MANUFACTURING COMPANY, LIMITED, Tokyo, 100-0004 (JP)
(72) Inventor: SEKINE Naoki, Asaka City Saitama 3518503 (JP); MASAMITSU Toshihiko, Asaka City Saitama 3518503 (JP)
(74) Representative: Isern Patentes y Marcas S.L.
(86) International application number: PCT/JP2025/011075
(87) International publication number: WO 2026/196559

(57) **Abstract**

[Problem] There is provided a motor position control method that can hold an electrical angle corresponding to a motor rotation state in which an object is stopped, using an inexpensive motor.

[Solution] The invention relates to a motor position control method for controlling torque of a motor 11 that provides power for moving an object, so as to hold a motor position where the object is stopped while a load in a reverse rotation direction or a forward rotation direction is applied to the motor 11. Position sensors 21 corresponding to respective ones of a plurality of motor phases are disposed, an electrical angle corresponding to a motor rotation state in which the object is stopped is detected based on detection signals from the position sensors 21, and the torque generated to hold the electrical angle is controlled.

## Description

### TECHNICAL FIELD

The present invention relates to a motor position control method, a motor position control program, and a motor control circuit.

### BACKGROUND ART

When a vehicle is stopped on an uphill slope or a downhill slope, a function of apply the brakes to prevent the vehicle from temporarily rolling backward or forward even when a brake lever is released is referred to as hill hold. This hill hold can be realized by hydraulic control of the brakes, but can be possibly more inexpensively realized by using the power of an electric drive motor. A related technology is disclosed in Patent Document 1.

Therefore, there is a demand for a method for manufacturing an inexpensive motor and being able to perform hill-hold position control using the motor.

### CITATION LIST

### PATENT DOCUMENT

Patent Document 1: JP 2006-005978 A

### SUMMARY OF THE INVENTION

### PROBLEM TO BE SOLVED BY THE INVENTION

Various aspects of the invention aims to provide a motor position control method, a motor position control program, and a motor control circuit that can hold an electrical angle corresponding to a motor rotation state in which an object is stopped, using an inexpensive motor.

### MEANS FOR SOLVING PROBLEM

Hereinafter, various aspects of the invention will be described.
[1] There is provided a motor position control method for controlling torque of a motor that provides power for moving an object, so as to hold a motor position where the object is stopped while a load in a reverse rotation direction or a forward rotation direction is applied to the motor. Position sensors corresponding to respective ones of a plurality of motor phases are disposed, an electrical angle corresponding to a motor rotation state in which the object is stopped is detected based on detection signals from the position sensors, and the torque generated to hold the electrical angle is controlled.
   According to the motor position control method in one aspect of the invention described in [1], the position sensors corresponding to the respective ones of the plurality of motor phases are disposed, the electrical angle corresponding to the motor rotation state in which the object is stopped is detected based on the detection signals from the position sensors, and the torque generated to hold the electrical angle is controlled. In this way, since the position sensors corresponding to the respective ones of the plurality of motor phases are disposed, inexpensive position sensors can be used, and therefore an inexpensive motor can be manufactured. At the same time, by controlling the torque generated to hold the electrical angle corresponding to the motor rotation state in which the object is stopped, vibration can be prevented from occurring when the object is held in a stopped state. Therefore, even when the motor is inexpensive, motor position control that can prevent the occurrence of vibration can be performed. Incidentally, the object may be any object other than a vehicle as long as the object is moved by the motor.
[2] In the motor position control method according to [1] above, the detection signals from the position sensors are patterns of signals detected for the respective ones of the plurality of motor phases. The electrical angle has a predetermined electrical angle range, and a median value of the range or one end value of the range is detected as the electrical angle corresponding to the motor rotation state in which the object is stopped.
   According to the motor position control method in one aspect of the invention described in [2], the position sensors corresponding to the respective ones of the plurality of motor phases are disposed, the electrical angle corresponding to the motor rotation state in which the object is stopped is detected based on the detection signals from the position sensors, the detection signals from the position sensors are the patterns of signals detected for the respective ones of the plurality of motor phases, the electrical angle has the predetermined electrical angle range, and the median value of the range or one end value of the range is detected as the electrical angle corresponding to the motor rotation state in which the object is stopped. Then, the torque generated to hold the electrical angle is controlled. In this way, since the position sensors corresponding to the respective ones of the plurality of motor phases are disposed, inexpensive position sensors can be used, and therefore an inexpensive motor can be manufactured.
[3] In the motor position control method according to [1] or [2] above, the torque generated to hold the electrical angle is torque that is generated toward the electrical angle.
   According to the motor position control method in one aspect of the invention described in [3], the position sensors corresponding to the respective ones of the plurality of motor phases are disposed, the electrical angle corresponding to the motor rotation state in which the object is stopped is detected based on the detection signals from the position sensors, and control is performed such that the torque generated to hold the electrical angle is torque that is generated toward the electrical angle. In this way, since the position sensors corresponding to the respective ones of the plurality of motor phases are disposed, inexpensive position sensors can be used, and therefore an inexpensive motor can be manufactured.
[4] In the motor position control method according to [2] above, when the electrical angle has moved by a predetermined angle in a positive direction or a predetermined angle in a negative direction, the electrical angle at which the object is stopped is changed, and control is performed to generate torque for holding the electrical angle after the change.
[5] In the motor position control method according to any one of [1], [2], and [4] above, the object is a vehicle, the electrical angle corresponding to the motor rotation state in which the vehicle is stopped while a load in the reverse rotation direction or the forward rotation direction is applied to the motor is an electrical angle corresponding to a motor rotation state in which the vehicle is stopped on an uphill slope or a downhill slope, the position sensors are Hall sensors, and controlling the torque generated to hold the electrical angle is hill-hold control.
[6] In the motor position control method according to any one of [1], [2], and [4] above, the plurality of motor phases are three phases.
[7] There is provided a motor position control program that controls torque of a motor that provides power for moving an object, so as to hold a motor position where the object is stopped while a load in a reverse rotation direction or a forward rotation direction is applied to the motor, the program causing a computer to realize: Function (a) of detecting, as an electrical angle corresponding to a motor rotation state in which the object is stopped, a median value or one end value of a predetermined electrical angle range of the electrical angle corresponding to the motor rotation state in which the object is stopped, based on patterns of detection signals from position sensors disposed corresponding to respective ones of a plurality of motor phases; and Function (b) of performing control to generate the torque toward the electrical angle so as to hold the electrical angle detected by Function (a).
   According to the motor position control program in one aspect of the invention described in [7], Function (a) detects, as the electrical angle corresponding to the motor rotation state in which the object is stopped, the median value or one end value of the predetermined electrical angle range of the electrical angle of the motor position where the object is stopped, based on the patterns of detection signals from the position sensors disposed corresponding to the respective ones of the plurality of motor phases, and Function (b) performs control to generate the torque toward the electrical angle so as to hold the electrical angle detected by Function (a). In this way, since the position sensors corresponding to the respective ones of the plurality of motor phases are disposed to control the motor position, inexpensive position sensors can be used, and therefore an inexpensive motor can be manufactured.
[8] There is provided a motor control circuit that includes position sensors corresponding to respective ones of a plurality of motor phases, and that controls a motor that provides power for moving a vehicle, the circuit including: an inverter circuit that supplies electric power to the plurality of motor phases; a power supply that supplies electric power to the inverter circuit; an inverter drive control unit that drive-controls the inverter circuit; a position detection unit that detects an electrical angle corresponding to a motor rotation state in which the vehicle is stopped on an uphill slope or a downhill slope, based on detection signals from the position sensors; and a hill-hold control unit that controls the inverter drive control unit such that torque for holding the electrical angle detected by the position detection unit is generated. The hill-hold control unit controls the inverter drive control unit such that the torque is generated toward the electrical angle.
   According to the motor control circuit in one aspect of the invention described in [8], the position sensors corresponding to the respective ones of the plurality of motor phases are provided, the electrical angle corresponding to the motor rotation state in which the vehicle is stopped on an uphill slope or a downhill slope is detected by the position detection unit based on the detection signals from the position sensors, and the hill-hold control unit controls the inverter drive control unit such that the torque is generated toward the electrical angle. In this way, since the position sensors corresponding to the respective ones of the plurality of motor phases are provided, inexpensive position sensors can be used, and therefore an inexpensive motor can be manufactured. At the same time, the control of the hill-hold control unit can prevent vibration from occurring when the vehicle is held in a stopped state.
[9] In the motor control circuit according to [8] above, the position detection unit detects the electrical angle, and when the electrical angle has moved by a predetermined angle in a positive direction or a predetermined angle in a negative direction, the electrical angle at which the vehicle is stopped is changed, and the hill-hold control unit controls the inverter drive control unit such that the torque for holding the electrical angle after the change is generated.

### EFFECT OF THE INVENTION

According to various aspects of the invention, it is possible to provide the motor position control method, the motor position control program, and the motor control circuit that can hold the electrical angle corresponding to the motor rotation state in which the object is stopped, using an inexpensive motor.

### BRIEF DESCRIPTION OF DRAWINGS

Fig. 1 is a diagram illustrating the waveforms of three-phase induced voltages and the detection values of three-phase Hall sensors when lock energization is performed at the motor position corresponding to an electrical angle of 210 degrees in a case where the electrical angle corresponding to a motor rotation state is in the range of 180 degrees or more and less than 240 degrees in a motor position control method according to one aspect of the invention.
Fig. 2 is a torque distribution diagram when lock energization is performed at the motor position corresponding to an electrical angle of 210 degrees illustrated in Fig. 1.
Fig. 3 is a diagram illustrating a configuration of a motor control circuit according to one aspect of the invention.
Fig. 4 is a schematic diagram illustrating a state in which a vehicle including the motor control circuit illustrated in Fig. 2 does not roll backward temporarily due to a hill-hold function even when a brake lever is released while stopped on an uphill slope.
Fig. 5 is a diagram describing an example in which energization is switched to change the lock position when the electrical angle position has moved by ± 120 degrees or more.
Fig. 6 is a diagram describing an example in which the lock position is changed to an electrical angle of 150 degrees when it is detected that the electrical angle position has moved to 90 degrees.
Fig. 7 is a diagram describing an example in which the lock position is changed to an electrical angle of 270 degrees when it is detected that the electrical angle position has moved to 330 degrees.
Fig. 8 is a diagram illustrating a flowchart of hill-hold control performed using the motor control circuit illustrated in Fig. 3 installed in a vehicle using a motor as a drive source.
Fig. 9 is a diagram illustrating the relationship between the induced voltages of the motor and the Hall sensors.
Fig. 10 is a diagram illustrating the electrical angle of the motor position when the three-phase sensor pattern is changed while the motor is in rotation.
Fig. 11 is a diagram illustrating the electrical angle positions corresponding to the maximum values of the generated torque when the lock position is at an electrical angle of 180 degrees.
Fig. 12 is a diagram describing an example in which the lock position is changed to an electrical angle of 120 degrees when it is detected that the electrical angle position has moved to 60 degrees.
Fig. 13 is a diagram describing an example in which the lock position is changed to an electrical angle of 240 degrees when it is detected that the electrical angle position has moved to 300 degrees.
Fig. 14 is a diagram illustrating the electrical angle positions corresponding to the maximum values of the generated torque when the lock position is at an electrical angle of 210 degrees.
Fig. 15 is a diagram describing an example in which the lock position is changed to an electrical angle of 180 degrees when it is detected that the electrical angle position has moved to 90 degrees.
Fig. 16 is a diagram describing an example in which the lock position is changed to an electrical angle of 240 degrees when it is detected that the electrical angle position has moved to 330 degrees.

### MODE(S) FOR CARRYING OUT THE INVENTION

Hereinafter, embodiments of the invention will be described in detail with reference to the drawings. However, the invention is not limited to the following description, and it will be readily understood by those skilled in the art that various modifications in mode and detail can be modified without departing from the concept and scope of the invention. Therefore, the invention should not be construed as being limited to the contents of the embodiments to be described below.

### (First embodiment)

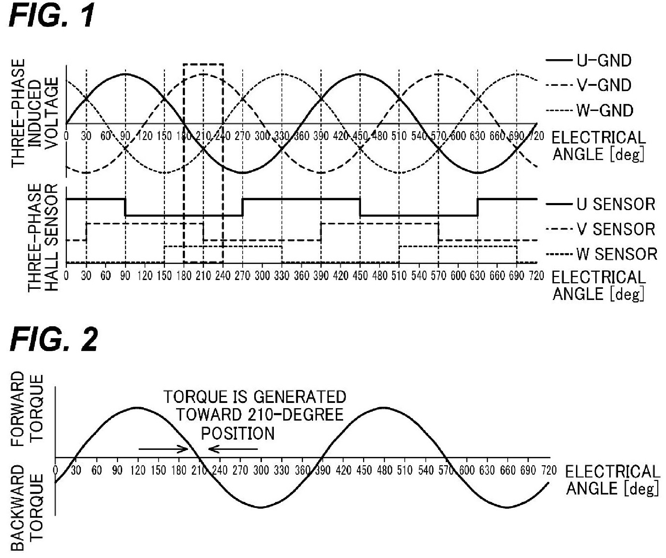

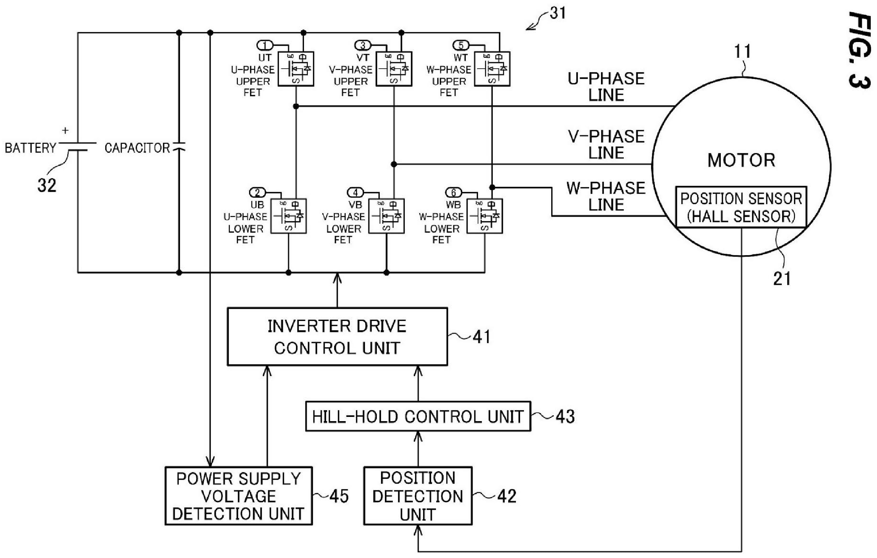

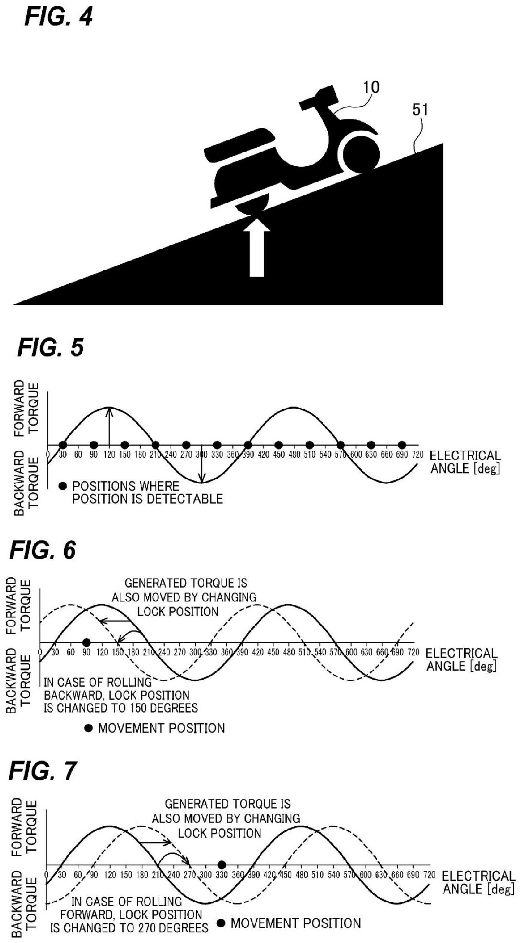

Fig. 1 is a diagram illustrating the waveforms of three-phase induced voltages and the detection values of three-phase Hall sensors when lock energization is performed at the motor position corresponding to an electrical angle of 210 degrees in a case where the electrical angle corresponding to a motor rotation state is in the range of 180 degrees or more and less than 240 degrees in a motor position control method according to one aspect of the invention. Fig. 2 is a torque distribution diagram when lock energization is performed at the motor position corresponding to an electrical angle of 210 degrees illustrated in Fig. 1. Fig. 3 is a diagram illustrating a configuration of a motor control circuit according to one aspect of the invention. Fig. 4 is a schematic diagram illustrating a state in which a vehicle including the motor control circuit illustrated in Fig. 2 does not roll backward temporarily due to a hill-hold function even when a brake lever is released while stopped on an uphill slope.

The motor position control method according to one aspect of the invention is a control method in which the torque of a motor 11 illustrated in Fig. 3 that provides power for moving an object is controlled to hold a motor position where the object is stopped while a load in a reverse rotation direction or a forward rotation direction is applied to the motor 11.

In the motor position control method, position sensors 21 corresponding to respective ones of a plurality of motor phases are disposed, an electrical angle corresponding to the motor rotation state in which the object is stopped (hereinafter, also referred to as the "electrical angle" or the "electrical angle of the motor position") is detected based on detection signals from the position sensors 21, and the torque generated to hold the electrical angle is controlled. Accordingly, the motor position where the object is stopped can be held. In the present embodiment, the plurality of motor phases are three phases: U phase, V phase, and W phase.

In the present embodiment, the object is a vehicle 10 illustrated in Fig. 4. In addition, the electrical angle corresponding to the motor rotation state in which the vehicle 10 is stopped while a load in the reverse rotation direction or the forward rotation direction is applied to the motor 11 is an electrical angle corresponding to the motor rotation state in which the vehicle 10 is stopped on an uphill slope 51 (or a downhill slope) illustrated in Fig. 4. In the present embodiment, Hall sensors are used as the position sensors 21. Controlling the torque generated to hold the electrical angle is hill-hold control.

Detecting the electrical angle corresponding to the motor rotation state in which the object is stopped, based on the detection signals from the position sensors 21 described above, means that the detection signals from the position sensors 21 are the patterns of signals detected for the respective ones of the plurality of motor phases (respective ones of the U phase, the V phase, and the W phase). That is, as illustrated in Fig. 1, the electrical angle corresponding to the motor rotation state in which the vehicle is stopped can be detected based on the detection signals from the three-phase Hall sensors. The electrical angle has a predetermined electrical angle range (for example, 180 to 240 degrees), and a median value (210 degrees) of this range is detected as the electrical angle corresponding to the motor rotation state in which the vehicle is stopped. Incidentally, in the present embodiment, the median value of the electrical angle range is set as the electrical angle corresponding to the motor rotation state in which the vehicle is stopped; however, one end value of the electrical angle range may be set as the electrical angle corresponding to the motor rotation state in which the vehicle is stopped.

The torque generated to hold the detected electrical angle corresponding to the motor rotation state in which the vehicle is stopped is torque that is generated toward the electrical angle. That is, as illustrated in Fig. 2, when the electrical angle is 210 degrees, torque is generated toward the 210-degree lock position by controlling the torque of the motor 11 so as to perform lock energization (U → W energization illustrated in Table 1) at the 210-degree position. Therefore, hill hold can be performed. Incidentally, Table 1 illustrates the patterns of energization from an upper side (U-phase upper FET, a V-phase upper FET, and W-phase upper FET) to a lower side (U-phase lower FET, V-phase lower FET, and W-phase lower FET) illustrated in Fig. 3 when each of electrical angle positions where position detection can be performed by the Hall sensors illustrated in Fig. 5 is set as the lock position.

**[Table 1]**

| Motor position (electrical angle) when hill hold is started | | Lock position | Energization pattern (upper side → lower side) |
|---|---|---|---|
| 0 deg or more | Less than 60 deg | 30 deg | W → U |
| 60 deg or more | Less than 120 deg | 90 deg | W → V |
| 120 deg or more | Less than 180 deg | 150 deg | U → V |
| 180 deg or more | Less than 240 deg | 210 deg | U → W |
| 240 deg or more | Less than 300 deg | 270 deg | V → W |
| 300 deg or more | Less than 360 deg | 330 deg | V → U |

When the electrical angle of 210 degrees has moved by a predetermined angle in a positive direction or a predetermined angle in a negative direction, the electrical angle of 210 degrees at which the object (vehicle 10) is stopped is changed, and control is performed to generate torque for holding the electrical angle after the change. Details will be described below.

As illustrated in Fig. 5, the maximum values of the generated torque occur at ± 90 degrees from the lock position. As described above, when the lock position is at an electrical angle of 210 degrees, the maximum values of the generated torque occur at 120 degrees and 300 degrees, and when torque is generated beyond these positions, hill hold cannot be performed. Since the Hall sensors can perform position detection at every 60 electrical angle, when the position moves by ± 120 degrees or more, energization is switched to change the lock position.

When the vehicle 10 in a stopped state illustrated in Fig. 4 rolls backward, and based on the detection signals from the Hall sensors, it is detected that the electrical angle position has moved to 90 degrees as illustrated in Fig. 6, the lock position is changed to an electrical angle of 150 degrees. By changing the lock position, the generated torque is controlled such that lock energization (U → V energization illustrated in Table 1) is performed at the 150-degree lock position, thereby generating the torque toward the 150-degree position. Therefore, hill hold can be performed at this position.

When the vehicle 10 in a stopped state illustrated in Fig. 4 rolls forward, and based on the detection signals from the Hall sensors, it is detected that the electrical angle position has moved to 330 degrees as illustrated in Fig. 7, the lock position is changed to an electrical angle of 270 degrees. By changing the lock position, the generated torque is controlled such that lock energization (V → W energization illustrated in Table 1) is performed at the 270-degree lock position, thereby generating the torque toward the 270-degree position. Therefore, hill hold can be performed at this position.

According to the present embodiment, Hall sensors are disposed as the position sensors 21 corresponding to the respective ones of the three phases: U phase, V phase, and W phase, the electrical angle corresponding to the motor rotation state in which the vehicle 10 is stopped is detected based on the detection signals from the Hall sensors, and the torque generated to hold the electrical angle is controlled. In this way, since the Hall sensors corresponding to the respective ones of the three phases are disposed, inexpensive position sensors can be used, and therefore an inexpensive motor can be manufactured. At the same time, by controlling the torque generated to hold the electrical angle corresponding to the motor rotation state in which the vehicle 10 is stopped, vibration can be prevented from occurring when the vehicle 10 is held in a stopped state. Therefore, even when the motor 11 is inexpensive, motor position control that can prevent the occurrence of vibration can be performed. Incidentally, the vehicle 10 may be any object other than a vehicle as long as the object is moved by the motor 11.

In addition, the detection signals from the Hall sensors corresponding to the respective ones of the three phases are the patterns of signals detected for the respective ones of the three phases, the electrical angle has a predetermined electrical angle range, and the median value of the range or one end value of the range is detected as the electrical angle corresponding to the motor rotation state in which the vehicle 10 is stopped. Then, the torque generated to hold the electrical angle is controlled. In this way, since the Hall sensors corresponding to the respective ones of the three phases are disposed, inexpensive position sensors can be used, and therefore an inexpensive motor can be manufactured.

In addition, as described above, the electrical angle is detected, and control is performed such that the torque generated to hold the electrical angle is torque that is generated toward the electrical angle. In this way, since the Hall sensors corresponding to the respective ones of the three phases are disposed, inexpensive position sensors can be used, and therefore an inexpensive motor can be manufactured.

### (Second embodiment)

The motor control circuit according to one aspect of the invention will be described with reference to Fig. 3.

The motor control circuit illustrated in Fig. 3 is a circuit that includes the position sensors (for example, Hall sensors) 21 corresponding to the respective ones of the plurality of motor phases (for example, each of the three phases: U phase, V phase, and W phase), and that controls the motor 11 that provides power for moving the vehicle 10. The motor control circuit includes an inverter circuit 31 that supplies electric power to the three phases: U phase, V phase, and W phase. Electric power is supplied to the inverter circuit 31 by a power supply (battery) 32. The inverter circuit 31 is drive-controlled by an inverter drive control unit 41. An electrical angle corresponding to a motor rotation state in which the vehicle 10 is stopped on an uphill slope or a downhill slope is detected by a position detection unit 42 based on the detection signals from the Hall sensors 21. A hill-hold control unit 43 controls the inverter drive control unit 41 such that the torque for holding the electrical angle detected by the position detection unit 42 is generated. The hill-hold control unit 43 controls the inverter drive control unit 41 such that the torque is generated toward the electrical angle.

The position detection unit 42 detects the above-described electrical angle. When the electrical angle has moved by a predetermined angle in the positive direction or a predetermined angle in the negative direction, the electrical angle at which the vehicle 10 is stopped is changed, and the hill-hold control unit 43 controls the inverter drive control unit 41 such that torque for holding the electrical angle after the change is generated. A specific example of this control is described with reference to Figs. 6 and 7 in the first embodiment.

Incidentally, a power supply voltage detection unit 45 detects a voltage of the power supply (battery 32), and supplies the data of the detected voltage of the battery 32 to the inverter drive control unit 41.

According to the present embodiment, the Hall sensors 21 corresponding to the respective ones of the three phases: U phase, V phase, and W phase are provided, the electrical angle corresponding to the motor rotation state in which the vehicle 10 is stopped on an uphill slope or a downhill slope is detected by the position detection unit 42 based on the detection signals from the Hall sensors 21, and the hill-hold control unit 43 controls the inverter drive control unit 41 such that the torque is generated toward the electrical angle. In this way, since the position sensors 21 corresponding to the respective ones of the three phases are provided, inexpensive position sensors can be used, and therefore an inexpensive motor can be manufactured. At the same time, the control of the hill-hold control unit 43 can prevent vibration from occurring when the vehicle 10 is held in a stopped state.

### (Third embodiment)

The motor position control method according to one aspect of the invention will be described with reference to Figs. 3, 4, 8, and 9.

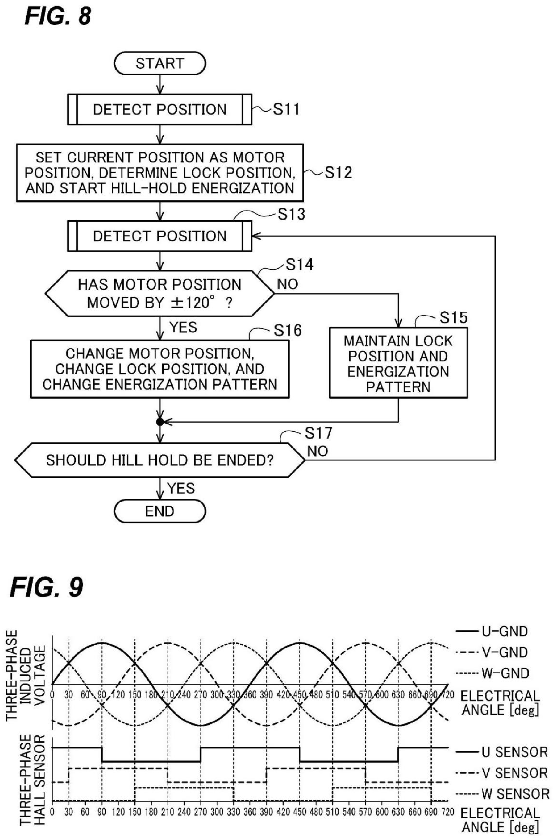

Fig. 8 is a diagram illustrating a flowchart of hill-hold control performed using the motor control circuit illustrated in Fig. 3 installed in a vehicle using a motor as a drive source.

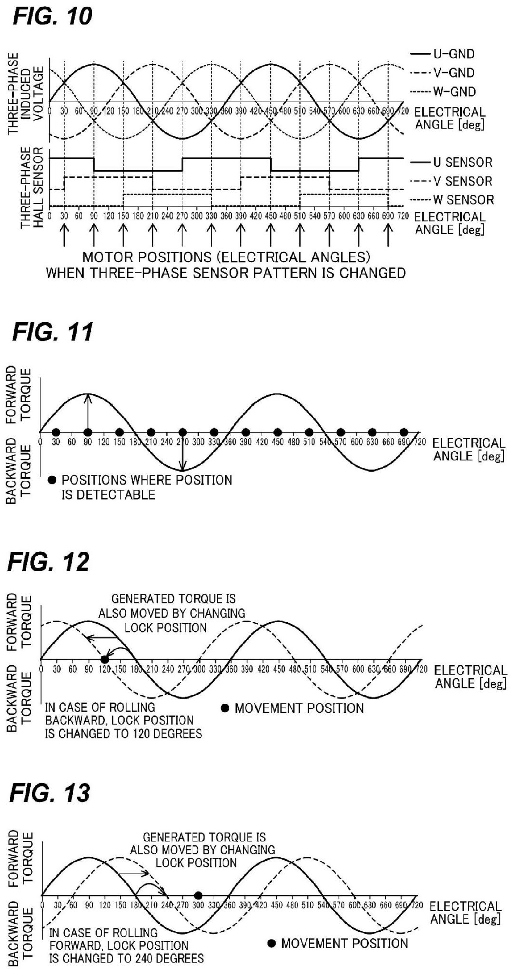

As illustrated in S11 of Fig. 8, first, the position where the vehicle 10 is stopped on an uphill slope or a downhill slope is detected as the current position. In detail, in a case where the relationship between the induced voltages of the motor 11 and the Hall sensors 21 is as illustrated in Fig. 9, as a method for calculating the electrical angle of the motor position, when the three-phase Hall sensor pattern does not change for a certain period of time, it is determined that the motor is stopped, and the motor stop position is detected. The motor stop position is set to the electrical angle at the center of the three-phase Hall sensor pattern (see Table 2 and Table 3). Incidentally, as illustrated in Fig. 10, when the motor 11 rotates, the three-phase Hall sensor pattern changes, and therefore the timing of this change is detected and used as the electrical angle of the motor position. However, since the motor 11 is a rotating body, the electrical angle is calculated as a value less than 360 degrees with 360 degrees regarded as 0 degrees.

**[Table 2]**

| Hall sensor pattern | | | Motor position (electrical angle) |
|---|---|---|---|
| U phase | V phase | W phase | |
| ON | OFF | OFF | 0 deg |
| ON | ON | OFF | 60 deg |
| OFF | ON | OFF | 120 deg |

**[Table 3]**

| Hall sensor pattern | | | Motor position (electrical angle) |
|---|---|---|---|
| U phase | V phase | W phase | |
| OFF | ON | ON | 180 deg |
| OFF | OFF | ON | 240 deg |
| ON | OFF | ON | 300 deg |

Next, as illustrated in S12 of Fig. 8, the detected current position is set as the motor position, the lock position of the motor 11 is determined, and hill-hold energization is started. Details are described in the first embodiment, Fig. 2, and Table 1.

Next, as illustrated in S13 and S14 of Fig. 8, the current motor position is detected. At this time, it is determined whether the electrical angle of the motor position has moved by ± 120 degrees or more, and when the electrical angle has not moved by ± 120 degrees or more (in the case of No), and the lock position of the motor 11 and the hill-hold energization pattern are maintained (S15). Details are described in the first embodiment, Fig. 2, and Table 1.

Alternatively, it is determined whether the electrical angle of the motor position has moved by ± 120 degrees or more, and when the electrical angle has moved by ± 120 degrees or more (in the case of Yes), and the electrical angle of the lock position of the motor is changed, and the energization pattern is changed (S16). Details are described in the first embodiment and Figs. 5 to 7.

Next, as illustrated in S17 of Fig. 8, it is determined whether to end the hill hold. That is, when the rotation of the motor is stopped and the three-phase Hall sensor pattern does not change, it is determined that the hill hold is not to be ended, and the process proceeds to the position detection step illustrated in S13 of Fig. 8. Alternatively, when the rotation of the motor is started and the three-phase Hall sensor pattern changes, it is determined that the hill hold is to be ended.

### (Fourth embodiment)

A motor position control program according to one aspect of the invention will be described.

The motor position control program is a program that controls the torque of the motor 11 that provides power for moving the object (vehicle 10), so as to hold the motor position where the object is stopped while a load in the reverse rotation direction or the forward rotation direction is applied to the motor 11.

The motor position control program is a program that realizes the following Function (a) and Function (b).
- Function (a): A function of detecting, as an electrical angle corresponding to a motor rotation state in which the vehicle 10 is stopped, a median value or one end value of a predetermined electrical angle range of the electrical angle corresponding to the motor rotation state in which the vehicle 10 is stopped, based on the patterns of detection signals from the position sensors (Hall sensors) 21 disposed corresponding to the respective ones of the plurality of motor phases (respective ones of the U phase, the V phase, and the W phase).
- Function (b): A function of performing control to generate torque toward the electrical angle so as to hold the electrical angle detected by Function (a).

According to the present embodiment, Function (a) detects, as the electrical angle corresponding to the motor rotation state in which the vehicle is stopped, the median value or one end value of the predetermined electrical angle range of the electrical angle of the motor position where the vehicle 10 is stopped, based on the patterns of detection signals from the Hall sensors 21 disposed corresponding to the respective ones of the three phases, and Function (b) performs control to generate the torque toward the electrical angle so as to hold the electrical angle detected by Function (a). In this way, since the Hall sensors 21 corresponding to the respective ones of the three phases are disposed to control the motor position, inexpensive position sensors can be used, and therefore an inexpensive motor can be manufactured.

### (Fifth embodiment)

In the present embodiment, a case where three-phase energization is adopted as the energization pattern will be described; however, the basic motor position control method is the same as in the first embodiment.

Table 4 illustrates the relationship between the motor position, the lock position, and the energization pattern at the start of hill hold when three-phase energization is adopted as the energization pattern.

**[Table 4]**

| Motor position (electrical angle) when hill hold is started | | Lock position | Energization pattern |
|---|---|---|---|
| -30 deg or more | Less than 30 deg | 0 deg | V, W → U |
| 30 deg or more | Less than 90 deg | 60 deg | W → U, V |
| 90 deg or more | Less than 150 deg | 120 deg | U, W → V |
| 150 deg or more | Less than 210 deg | 180 deg | U → V, W |
| 210 deg or more | Less than 270 deg | 240 deg | U, V → W |
| 270 deg or more | Less than 330 deg | 300 deg | V → U, W |
| 330 deg or more | Less than 390 deg | 360 deg | V, W → U |

When the electrical angle of 180 degrees has moved by a predetermined angle in the positive direction or a predetermined angle in the negative direction, the electrical angle of 180 degrees at which the object (vehicle 10) is stopped is changed, and control is performed to generate torque for holding the electrical angle after the change. Details will be described below.

As illustrated in Fig. 11, the maximum values of the generated torque occur at ± 90 degrees from the lock position. As described above, when the lock position is at an electrical angle of 180 degrees, the maximum values of the generated torque occur at 90 degrees and 270 degrees, and when torque is generated beyond these positions, hill hold cannot be performed. In the present embodiment, when the position moves by ± 90 degrees or more, energization is switched to change the lock position.

When the vehicle 10 in a stopped state illustrated in Fig. 4 rolls backward, and based on the detection signals from the Hall sensors, it is detected that the electrical angle position has moved to 60 degrees as illustrated in Fig. 12, the lock position is changed to an electrical angle of 120 degrees. By changing the lock position, the generated torque is controlled such that lock energization (U, W → V energization illustrated in Table 4) is performed at the 120-degree lock position, thereby generating the torque toward the 120-degree position. Therefore, hill hold can be performed at this position.

When the vehicle 10 in a stopped state illustrated in Fig. 4 rolls forward, and based on the detection signals from the Hall sensors, it is detected that the electrical angle position has moved to 300 degrees as illustrated in Fig. 13, the lock position is changed to an electrical angle of 240 degrees. By changing the lock position, the generated torque is controlled such that lock energization (U, V → W energization illustrated in Table 4) is performed at the 240-degree lock position, thereby generating the torque toward the 240-degree position. Therefore, hill hold can be performed at this position.

In the present embodiment as well, the same effects as in the first embodiment can be obtained.

### (Sixth embodiment)

In the present embodiment, a case where position sensors capable of performing detection with an electrical angle accuracy of 30 degrees are used will be described; however, the basic motor position control method is the same as in the first embodiment.

Table 5 illustrates the relationship between the motor position, the lock position, and the energization pattern at the start of hill hold when the position sensors capable of performing detection with an electrical angle accuracy of 30 degrees.

**[Table 5]**

| Motor position (electrical angle) when hill hold is started | | Lock position | Energization pattern (upper side → lower side) |
|---|---|---|---|
| 0 deg or more | Less than 30 deg | 30 deg | W → U |
| 30 deg or more | Less than 60 deg | 60 deg | W → U, V |
| 60 deg or more | Less than 90 deg | 90 deg | W → V |
| 90 deg or more | Less than 120 deg | 120 deg | W, U → V |
| 120 deg or more | Less than 150 deg | 150 deg | U → V |
| 150 deg or more | Less than 180 deg | 180 deg | U → V, W |
| 180 deg or more | Less than 210 deg | 210 deg | U → W |
| 210 deg or more | Less than 240 deg | 240 deg | U, V → W |
| 240 deg or more | Less than 270 deg | 270 deg | V → W |
| 270 deg or more | Less than 300 deg | 300 deg | V → W, U |
| 300 deg or more | Less than 330 deg | 330 deg | V → U |
| 330 deg or more | Less than 360 deg | 360 deg | V, W → U |

When the electrical angle of 210 degrees has moved by a predetermined angle in the positive direction or a predetermined angle in the negative direction, the electrical angle of 210 degrees at which the object (vehicle 10) is stopped is changed, and control is performed to generate torque for holding the electrical angle after the change. Details will be described below.

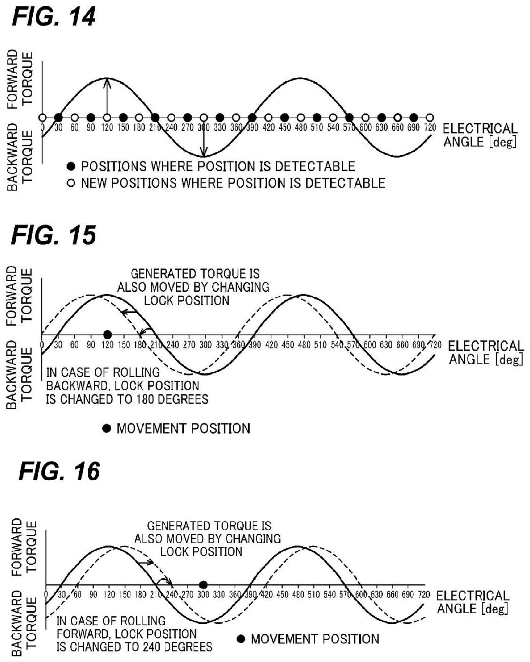

As illustrated in Fig. 14, the maximum values of the generated torque occur at ± 90 degrees from the lock position. As described above, when the lock position is at an electrical angle of 210 degrees, the maximum values of the generated torque occur at 120 degrees and 300 degrees, and when torque is generated beyond these positions, hill hold cannot be performed. In the present embodiment, when the position moves by ± 90 degrees or more, energization is switched to change the lock position.

When the vehicle 10 in a stopped state illustrated in Fig. 4 rolls backward, and based on the detection signals from the Hall sensors, it is detected that the electrical angle position has moved to 90 degrees as illustrated in Fig. 15, the lock position is changed to an electrical angle of 180 degrees. By changing the lock position, the generated torque is controlled such that lock energization (U → V, W energization illustrated in Table 5) is performed at the 180-degree lock position, thereby generating the torque toward the 180-degree position. Therefore, hill hold can be performed at this position.

When the vehicle 10 in a stopped state illustrated in Fig. 4 rolls forward, and based on the detection signals from the Hall sensors, it is detected that the electrical angle position has moved to 330 degrees as illustrated in Fig. 16, the lock position is changed to an electrical angle of 240 degrees. By changing the lock position, the generated torque is controlled such that lock energization (U, V → W energization illustrated in Table 5) is performed at the 240-degree lock position, thereby generating the torque toward the 240-degree position. Therefore, hill hold can be performed at this position.

In the present embodiment as well, the same effects as in the first embodiment can be obtained.

In addition, in the present embodiment, by using the position sensors capable of performing detection with an electrical angle accuracy of 30 degrees, the lock positions can be set at 30-degree intervals, so that hill hold can be performed on the vehicle at motor positions finer than in the first embodiment.

### EXPLANATIONS OF LETTERS OR NUMERALS

- 11: MOTOR
- 21: POSITION SENSOR
- 31: INVERTER CIRCUIT
- 32: POWER SUPPLY (BATTERY)
- 41: INVERTER DRIVE CONTROL UNIT
- 42: POSITION DETECTION UNIT
- 43: HILL-HOLD CONTROL UNIT
- 45: POWER SUPPLY VOLTAGE DETECTION UNIT

## Claims

1. A motor position control method for controlling torque of a motor that provides power for moving an object, so as to hold a motor position where the object is stopped while a load in a reverse rotation direction or a forward rotation direction is applied to the motor,
wherein position sensors corresponding to respective ones of a plurality of motor phases are disposed,
an electrical angle corresponding to a motor rotation state in which the object is stopped is detected based on detection signals from the position sensors, and
the torque generated to hold the electrical angle is controlled.

2. The motor position control method according to claim 1,
wherein the detection signals from the position sensors are patterns of signals detected for the respective ones of the plurality of motor phases, and
the electrical angle has a predetermined electrical angle range, and a median value of the range or one end value of the range is detected as the electrical angle corresponding to the motor rotation state in which the object is stopped.

3. The motor position control method according to claim 1 or 2,
wherein the torque generated to hold the electrical angle is torque that is generated toward the electrical angle.

4. The motor position control method according to claim 2,
wherein when the electrical angle has moved by a predetermined angle in a positive direction or a predetermined angle in a negative direction, the electrical angle at which the object is stopped is changed, and control is performed to generate torque for holding the electrical angle after the change.

5. The motor position control method according to any one of claims 1, 2, and 4,
wherein the object is a vehicle,
the electrical angle corresponding to the motor rotation state in which the vehicle is stopped while a load in the reverse rotation direction or the forward rotation direction is applied to the motor is an electrical angle corresponding to a motor rotation state in which the vehicle is stopped on an uphill slope or a downhill slope,
the position sensors are Hall sensors, and
controlling the torque generated to hold the electrical angle is hill-hold control.

6. The motor position control method according to any one of claims 1, 2, and 4,
wherein the plurality of motor phases are three phases.

7. A motor position control program that controls torque of a motor that provides power for moving an object, so as to hold a motor position where the object is stopped while a load in a reverse rotation direction or a forward rotation direction is applied to the motor, the program causing a computer to realize:
function (a) of detecting, as an electrical angle corresponding to a motor rotation state in which the object is stopped, a median value or one end value of a predetermined electrical angle range of the electrical angle of the motor position where the object is stopped, based on patterns of detection signals from position sensors disposed corresponding to respective ones of a plurality of motor phases; and
function (b) of performing control to generate the torque toward the electrical angle so as to hold the electrical angle detected by Function (a).

8. A motor control circuit that includes position sensors corresponding to respective ones of a plurality of motor phases, and that controls a motor that provides power for moving a vehicle, comprising:
an inverter circuit that supplies electric power to the plurality of motor phases;
a power supply that supplies electric power to the inverter circuit;
an inverter drive control unit that drive-controls the inverter circuit;
a position detection unit that detects an electrical angle corresponding to a motor rotation state in which the vehicle is stopped on an uphill slope or a downhill slope, based on detection signals from the position sensors; and
a hill-hold control unit that controls the inverter drive control unit such that torque for holding the electrical angle detected by the position detection unit is generated,
wherein the hill-hold control unit controls the inverter drive control unit such that the torque is generated toward the electrical angle.

9. The motor control circuit according to claim 8,
wherein the position detection unit detects the electrical angle, and when the electrical angle has moved by a predetermined angle in a positive direction or a predetermined angle in a negative direction, the electrical angle at which the vehicle is stopped is changed, and the hill-hold control unit controls the inverter drive control unit such that the torque for holding the electrical angle after the change is generated.
